**Europäisches Patentamt**

(19) **European Patent Office**

**Office européen des brevets**

(11) Numéro de publication: **0 077 271**
**B1**

(12) **FASCICULE DE BREVET EUROPEEN**

(45) Date de publication du fascicule du brevet:
**12.03.86**

(51) Int. Cl.⁴: **E 02 F 5/10**, E 02 D 29/06,
E 02 D 17/08, F 16 L 1/04

(21) Numéro de dépôt: **82401864.2**

(22) Date de dépôt: **11.10.82**

(54) **Procédé et dispositif de soutènement provisoire des parois latérales d'une tranchée.**

(30) Priorité: **14.10.81 FR 8119335**

(43) Date de publication de la demande:
**20.04.83 Bulletin 83/16**

(45) Mention de la délivrance du brevet:
**12.03.86 Bulletin 86/11**

(84) Etats contractants désignés:
**GB IT NL**

(56) Documents cités:
**FR - A - 2 369 387**
**GB - A - 1 235 790**
**GB - A - 2 015 115**

(73) Titulaire: **GEODIA, 5 rue d'Heliopolis, F-75017 Paris (FR)**

(72) Inventeur: **Cour, Francis Raymond, 34 avenue François Mansart, F-78600 Maisons-Laffitte (FR)**

(74) Mandataire: **Lepeudry-Gautherat, Thérèse et al, CABINET ARMENGAUD JEUNE CASANOVA et LEPEUDRY 23 boulevard de Strasbourg, F-75010 Paris (FR)**

ACTORUM AG

## Description

L'invention concerne un procédé et un dispositif de soutènement provisoire des parois latérales d'une tranchée, à la suite du creusement de cette dernière dans un sol pouvant être, en particulier, mais non exclusivement, un fond sous-marin constitué de matériaux présentant une faible cohésion tels que des sables, silts, vases ou argiles, pour permettre l'ensouillage, dans la tranchée, d'une conduite, de préférence substantiellement rigide, telle que les oléoducs ou pipe-lines de grand diamètre, comprenant une paroi interne métallique entourée, le cas échéant, d'une gaine protectrice en béton.

Afin de protéger les conduites, et notamment les oléoducs ou pipe-lines, des effets néfastes des courants sous-marins ou de la houle, ainsi que pour éviter l'accrochage des ancres de marine ou des chaluts de pêche sur ces conduites, on s'est efforcé depuis de nombreuses années d'ensouiller ces conduites dans les fonds sous-marins. Ceci a été réalisé en disposant ces conduites dans des tranchées creusées dans les fonds sous-marins. L'expérience a montré qu'il était très difficile, voire pratiquement impossible, en l'état actuel de la technique, de poser un oléoduc dans une tranchée préalablement creusée dans le fond sous-marin. Par contre, de nombreux dispositifs, tant mécaniques qu'hydrauliques, ont été développés pour permettre le creusement d'une tranchée sous une conduite préalablement disposée sous le fond sous-marin, la conduite venant par flexion, sous l'effet de son propre poids, reposer sur le fond de la tranchée à une certaine distance derrière les dispositifs de creusement de la tranchée, qui sont déplacés le long de la conduite sous cette dernière.

Parmi les moyens mécaniques développés à cet effet, certains permettent d'effectuer un draguage ou un fraisage des matériaux constituant le fond sous-marin sous la conduite.

Il est également connu de déplacer, sous la conduite, une charrue à soc, qui repousse latéralement les matériaux du fond sous-marin sur les deux côtés par rapport à la direction d'avancement de la charrue. Par ailleurs, les dispositifs hydrauliques utilisés dans le même but permettent un découpage hydraulique du fond sous-marin sous la conduite, par exemple, au moyen d'une pluralité de buses d'éjection d'un liquide, tel que de l'eau, à faible débit unitaire mais à haute pression, portées par un portique métallique que l'on déplace sur la conduite.

Si l'utilisation et la mise en œuvre de ces différents dispositifs et procédés connus procurent parfois de bons résultats, lorsque le fond sous-marin est constitué de matériaux présentant une cohésion, telle que la stabilité d'une tranchée à parois verticales, sensiblement verticales ou au moins très inclinées soit assurée, il n'en est pas de même lorsque le fond sous-marin est sablonneux, vaseux on constitué de tous autres matériaux pulvérulents ou sans cohésion suffisante, car les parois latérales de la tranchée s'effondrent et cette dernière se comble, au moins partiellement, avant que la conduite ne se soit convenablement positionnée sur le fond primitif de la tranchée.

Dans ce dernier cas, pour éviter le comblement immédiat ou quasi-immédiat de la tranchée, on est amené, au moyen des dispositifs précités, à dégager dans le fond sous-marin une dépression ou vallée d'une largeur importante, ce qui, d'une part, oblige à déplacer des quantités très volumineuses de matériaux, et, d'autre part, ne procure pas la protection recherchée pour la conduite, sauf à combler la dépression latéralement par rapport à la conduite, et, éventuellement, par dessus cette dernière, une fois celle-ci en place sur le fond de la dépression, en replaçant la majeure partie des matériaux enlevés lors du creusement, ce qui augmente substantiellement les coûts de l'opération.

On a également déjà essayé d'entraîner, derrière le dispositif de creusement, des coffrages ou gabarits présentant deux flancs rigides de maintien temporaire des parois latérales de la tranchée. Mais pour n'autoriser l'effondrement de ces parois qu'après la descente et le positionnement de la conduite dans la tranchée, ces flancs doivent s'étendrent sur une très grande distance, et il est, de ce fait, très difficile sinon impossible de les déplacer.

Pour remédier à ces différents inconvénients, il a déjà été proposé d'assurer l'ensouillage d'une conduite, telle qu'on oléoduc on pipe-line, dans un fond sous-marin en particulier constitué de matériaux présentant une faible cohésion, en développant sous cette conduite le procédé de creusement de tranchées connu sous les dénominations de tranchées «à la boue» ou «à parois moulées», consistant à substituer une boue aux matériaux extraits de la tranchée creusée, au fur et à mesure de l'avancement de cette dernière, de sorte que la boue exerce constamment sur les parois latérales, sensiblement verticales ou très inclinées, de la tranchée une pression suffisante pour que ces parois ne s'effondrent pas avant que la conduite ne soit positionnée sur le fond de la tranchée, le terme général de boue désignant n'importe lequel de ces milieux bien connus obtenus en mélangeant par exemple des matières argileuses et des produits antifloculants, tels que celui commercialisé sous le nom de Bentonite, ou autres produits thixotropiques, restant constamment déformable et ne présentant qu'une faible cohésion.

Le procédé d'ensouillage d'une conduite dans un fond sous-marin présenté ci-dessus consiste donc à disposer la conduite sur ce fond sous-marin, puis à creuser une tranchée sous la conduite, et à substituer une boue aux matériaux extraits de la tranchée creusée, au fur et à mesure de l'avancement de celle-ci, de façon à empêcher l'effondrement des parois latérales de la tranchée, enfin à obtenir que la conduite se positionne sur le fond de la tranchée.

Si le fond sous-marin est argileux, il est avantageux que, selon le procédé présenté ci-dessus matériaux argileux extraits lors du creusement de la tranchée soient filtrés et convenablement traités dans un dispositif malaxeur, déplacé avec l'ensemble en mouvement participant à la réalisation de la tranchée «à la boue», de sorte que ces matériaux argileux soient mélangés à des produits anti-floculants, puis réinjectés à l'état de boue dans la tranchée, ce recyclage des matériaux arrachés au fond sous-marin permettant de réaliser des économies substantielles de boue amenée sur le site.

Il est également proposé de malaxer sur place, dans la tranchée, les matériaux arrachés et d'effectuer «in situ» une adjonction d'eau et de produits anti-floculants, de sorte que la boue remplissant la tranchée soit directement constituée dans cette dernière.

Mais il faut noter que ces mises en œuvre économiques de ce procédé ne sont possibles qu'à la condition que le fond sous-marin soit constitué d'argiles présentant des propriétés physico-chimiques appropriées, ce qui est loin d'être toujours le cas. De plus, les moyens mécaniques à prévoir pour permettre cette réutilisation des matériaux localement disponibles sont coûteux et délicats à mettre en œuvre, de sorte qu'il apparaît préférable d'amener, dans tous les cas, sur le site, les quantités requises de Bentonite par exemple, que l'on utilisera en association avec le milieu liquide disponible sur le site.

Dans ces conditions, des quantités très importantes de produits secs doivent être déplacées, ce qui constitue un autre inconvénient non négligeable.

Cet inconvénient est également rencontré lorsque le procédé de tranchées «à la boue» ou «à parois moulées» est mis en œuvre sur un chantier terrestre, pour assurer le soutènement des parois latérales de tranchées creusées dans un sol émergeant.

Par la présente invention, on se propose de remédier aux inconvénients précités, au moyen d'un procédé se substituant avantageusement à ceux mis en œuvre jusqu'à présent tant sur des fonds sous-marins que sur des sols émergeants.

A cet effet, le procédé selon l'invention se caractérise en ce qu'il consiste à substituer un corps qui peut être réduit en volume aux matériaux extraits de la tranchée, au fur et à mesure de l'avancement de cette dernière, de sorte que ce corps, par sa présence ou par la pression qu'il exerce sur les parois latérales de la tranchée empêche l'effondrement de ces dernières, à placer la conduite sur la partie supérieure du corps, puis à piloter la réduction de volume de ce corps pour autoriser la descente et le positionnement de la conduite dans la tranchée ainsi que l'effondrement des parois latérales et éventuellement le comblement de cette dernière.

De préférence, ce procédé consiste également à déplacer, avec l'avancement de la tranchée, des moyens de maintien temporaire des parois latérales de la tranchée, empêchant leur effondrement avant que le corps susdit n'ait été mis en place dans la tranchée.

Ces moyens de maintien temporaire des parois latérales de la tranchée peuvent être déplacés soit à la suite de moyens de creusement de cette dernière, de tout type précité, soit de part et d'autre et sous cette dernière, de sorte que la tranchée puisse être creusée entre lesdits moyens de mantien.

Dans une forme préférée de réalisation, le procédé selon l'invention consiste à utiliser un corps expansible, disposé à l'état contracté ou comprimé dans la tranchée, et dont l'augmentation de volume est pilotée entre les deux parois latérales de cette dernière, pour empêcher leur effondrement.

Selon l'invention, on peut utiliser comme corps expansible une enveloppe d'une matière souple et déformable, amenée progressivement dans la tranchée à l'état replié ou enroulé sur elle-même, puis remplie d'un fluide à une pression au moins égale à la pression hydrostatique au niveau de la tranchée.

Si la taille de la conduite le permet, c'est-à-dire si la densité apparente de la conduite, qui est remplie d'eau à cette occasion, est suffisamment élevée, la conduite se positionne dans la tranchée sous l'effet de son propre poids, en réduisant le volume du corps susdit.

Dans le cas contraire, le procédé selon l'invention consiste de plus à créer un débit de fuite du fluide hors de l'enveloppe, pour commander la réduction de volume de l'enveloppe.

Dans les cas où le procédé selon l'invention est mis en œuvre sur un fond sous-marin, il est avantageux d'utiliser le liquide disponible dans le milieu environnant comme fluide de remplissage de l'enveloppe.

L'invention a également pour objet un dispositif de soutènement provisoire des parois latérales d'une tranchée, pour la mise en œuvre du procédé selon l'invention, ce dispositif se caractérisant en ce qu'il comprend un corps qui peut supporter la conduite et qui peut être réduit en volume, un dispositif de substitution dudit corps aux matériaux extraits de la tranchée creusée, ainsi, éventuellement qu'un dispositif de commande de la réduction de volume de ce corps, lorsque cette fonction n'est pas assurée par le poids propre de la conduite, le dispositif de substitution et, éventuellement, le dispositif de commande de la réduction de volume du corps étant de préférence destinés à être déplacés avec le dispositif utilisé pour le creusement de la tranchée.

De préférence, le dispositif de soutènement selon l'invention comprend également un dispositif de maintien temporaire des parois latérales de la tranchée, sous la forme d'un gabarit, caisson ou coffrage, présentant au moins deux flancs rigides déplacés en même temps que le dispositif de creusement, parallèlement à eux-mêmes et chacun parallèlement à une paroi latérale de la tranchée, dont il empêche l'effondrement, et entre lesquels le dispositif de substitution du corps susdit assure le positionnement de ce dernier dans la tranchée.

Dans une forme préférée de réalisation, le dispositif de substitution du corps susdit comprend un dispositif d'expansion d'un corps expansible, destiné à être disposé à l'état contracté ou comprimé dans la tranchée par un dispositif d'amenée, et le dispositif d'expansion comprend, lui-même, un divergent à l'entrée duquel le corps expansible se présente à l'état comprimé ou contracté.

Le dispositif d'expansion peut également comprendre un dispositif de pompage et d'injection d'un fluide sous pression dans le corps expansible constitué par une enveloppe d'une matière souple et déformable, progressivement amenée dans la tranchée, à l'état replié ou enroulé sur elle-même, par le dispositif d'amenée, à partir d'une réserve, de préférence déplacée en même temps que le dispositif d'amenée, le dispositif d'expansion, le dispositif de creusement et éventuellement le dispositif de commande de la diminution de volume du corps et le dispositif de maintien temporaire des parois latérales de la tranchée.

Dans ce dernier cas, il est avantageux que le dispositif de pompage et d'injection du fluide sous pression débouche dans le divergent et coopère avec ce dernier pour assurer le passage de l'enveloppe de l'état replié ou enroulé sur elle-même à l'état déployé, contre les parois de la tranchée.

Pour éviter tout déploiement intempestif de l'enveloppe, il est préférable que cette dernière soit maintenue à l'état replié ou enroulé sur elle-même dans des ligatures ou dans une gaine frangibles, qui sont rompues dans le dispositif d'expansion.

De plus, pour éviter qu'une déchirure accidentelle de l'enveloppe remplie de fluide sous pression rende inutile la poursuite de la mise en œuvre du procédé selon l'invention, un dispositif de resserrement transversal de l'enveloppe est prévu à la sortie du dispositif d'expansion.

Dans un premier exemple de réalisation, l'enveloppe se présente sous la forme d'un manchon, de section essentiellement cylindrique à l'état déployé.

Eventuellement, une telle enveloppe peut être segmentée en compartiments longitudinaux.

Dans un second exemple de réalisation, l'enveloppe se présente sous la forme d'une succession de soufflets, comprimés longitudinalement à l'état replié sur eux-mêmes, et amenés en chapelet dans le dispositif d'expansion et dans la tranchée où ils sont déployés à la suite les uns des autres.

Dans ces deux cas, le dispositif de pompage et d'injection peut assurer une alimentation centrale de l'enveloppe.

Dans un troisième exemple de réalisation, l'enveloppe peut se présenter sous la forme d'une bande allongée, stockée dans la réserve avec ses deux bords latéraux rapprochés ou superposés, le dispositif d'expansion comprenant au moins deux lèvres divergentes assurant l'écartement des bords latéraux de la bande, et entre lesquels débouche le dispositif de pompage et d'injection.

Mais l'enveloppe peut également se présenter sous la forme d'une bande allongée, stockée dans la réserve avec ses deux bords latéraux solidarisés, éventuellement par un dispositif de solidarisation, par exemple du type à glissière, autorisant leur désolidarisation, le dispositif d'expansion comprenant un dispositif d'ouverture de la bande, muni d'au moins deux lèvres divergentes assurant l'écartement des bords de l'ouverture, et entre lesquels débouche le dispositif de pompage et d'injection, le dispositif d'ouverture comprenant éventuellement un moyen de commande de la désolidarisation des bords latéraux solidarisés par le dispositif de solidarisation.

Dans ces deux derniers cas, il est avantageux que le dispositif d'expansion comprenne également au moins 2 lèvres convergentes, assurant le rapprochement ou la superposition, en regard d'une paroi de la tranchée contre laquelle ils sont appliqués par la pression du fluide injecté, des bords écartés par les lèvres divergentes.

Dans une autre forme de réalisation, interressante dans les deux derniers cas précités, le dispositif d'expansion comprend également un dispositif de solidarisation des bords préalablement écartés par les lèvres divergentes, éventuellement après leur rapprochement par des lèvres convergentes.

En ce qui concerne le pilotage de la diminution de volume d'un corps compressible ou coercible réalisé au moyen d'une enveloppe pouvant être remplie d'un fluide sous pression, l'invention prévoit, dans une première forme de réalisation, des orifices libres régulièrement répartis dans l'enveloppe, et autorisant un débit de fuite du fluide sous pression hors de cette dernière.

Dans une seconde forme de réalisation, si l'enveloppe se présente sous forme segmentée réalisée par un chapelet de soufflets, elle peut être munie d'au moins un clapet à ouverture commandée au niveau de chaque compartiment ou de chaque soufflet, pour libérer un débit de fuite du fluide sous pression hors de l'enveloppe.

La présente invention sera mieux comprise à l'aide d'exemples particuliers de mise en œuvre, qui seront décrits ci-après, à titre non limitatif, dans le cadre d'une application à l'ensouillage d'une conduite dans un fond sous-marin, en référence aux figures annexées dans lesquelles:

les figures 1 et 2 représentent des vues schématiques en coupe transversales d'une conduite ou pipe-line disposée au fond d'une tranchée creusée dans un fond sous-marin respectivement de bonne et de faible cohésion, à la suite de la mise en œuvre des procédés d'ensouillage connus,

la figure 3 représente une vue schématique en coupe longitudinale partielle d'une tranchée dont le soutènement des parois latérales est assuré selon un procédé et au moyen d'un dispositif selon l'invention,

les figures 4, 5, 6 et 7 représentent des vues schématiques en coupe transversales respectivement selon IV–IV, V–V, VI–VI et VII–VII de la figure 3,

la figure 8 représente une vue schématique en coupe longitudinale partielle d'un second exemple de réalisation d'un dispositif selon l'invention,

les figures 9 et 10 représentent des vues schématiques en coupe selon IX–IX et X–X de la figure 8,

les figures 11 et 12 représentent des vues partielles en coupe transversales de variantes de réalisations, et

les figures 13 et 14 représentent des vues en coupe longitudinales schématiques d'exemples de réalisations d'enveloppes de dispositifs selon l'invention.

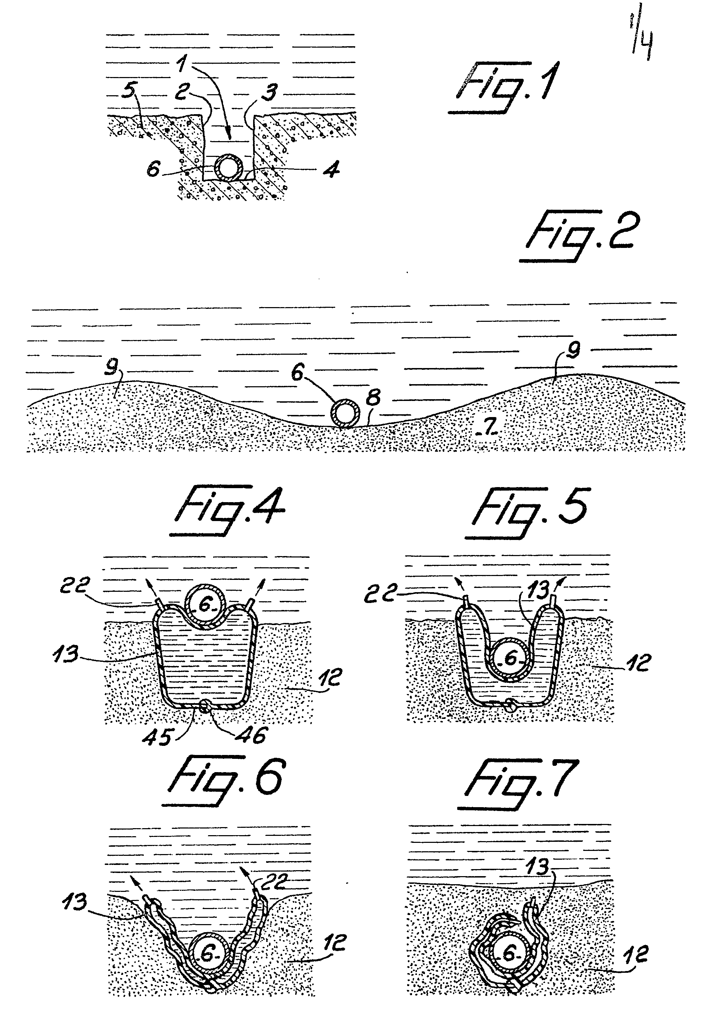

En référence à la figure 1, la tranchée 1, à parois latérales 2 et 3 sensiblement verticales, a été creusée par un dispositif de creusement mécanique connu, du type permettant un fraisage, un draguage, ou par une charrue à soc, ou encore par un dispositif hydraulique connu, du type comportant des buses d'éjection d'eau sous haute pression, auquel est éventuellement associé un dispositif d'évacuation des matériaux extraits par le dispositif de creusement, dans un fond sous-marin 5, constitué de matériaux présentant une bonne cohésion, et un pipe-line 6 est positionné sur le fond 4 de la tranchée. L'ensouillage ainsi réalisé est obtenu par la mise en œuvre des procédés connus présentés ci-dessus.

La figure 2 représente le résultat obtenu à la suite de la mise en œuvre, sur un fond sous-marin 7 constitué de matériaux à faible cohésion, tels que du sable, des procédés et des dispositifs ayant convenablement permis de positionner le pipe-line 6 sur le fond d'une tranchée 1 à parois latérales 2 et 3 verticales, dans un fond sous-marin 5 présentant une bonne cohésion, comme représenté sur la figure 1.

Sur la figure 2, le pipe-line 6 repose sur le fond d'une dépression 8 de grande largeur et bordée sur ses deux côtés par des monticules 9 de matériaux du fond sous-marin 7, qui ont été déplacés. On constate qu'au prix du déplacement de volumes très importants de matériaux, et donc d'une consommation importante d'énergie, une protection convenable du pipe-line 6 n'est pas assurée, sauf si les matériaux des monticules 9 sont à nouveau déplacés pour remplir la dépression 8, de part et d'autre du pipe-line 6 et éventuellement par-dessus ce dernier, ce qui accroît considérablement la durée des travaux d'ensouillage, double pratiquement des volumens à déplacer et l'énergie consommée, et occasionne, en conséquence, des dépenses bien plus importantes.

Sur la figure 3, on a représenté schématiquement, à titre symbolique, un dispositif de creusement 10, utilisé pour creuser une tranchée 11 sous le pipe-line 6 préalablement disposé sur le fond sous-marin 12 de cohésion faible ou moyenne. Il est bien entendu que le dispositif de creusement utilisé peut être l'un de ceux tant mécaniques qu'hydrauliques, de type connu et présentés ci-dessus, qui sont actuellement utilisés à cet effet, en association avec un dispositif d'évacuation (non représenté) des matériaux extraits lors du creusement de la tranchée 11. L'ensemble du dispositif de creusement 10 et du dispositif d'évacuation est déplacé le long du pipe-line 6, et au fur et à mesure de l'avancement de la tranchée 11, une enveloppe 13, réalisée en un matériau souple et déformable, est amenée dans la tranchée 11, où elle est remplie avec de l'eau du milieu aquatique environnant, pour occuper tout le volume interne de la tranchée 11, en se substituant aux matériaux provenant du creusement de cette dernière et évacués.

L'enveloppe 13 se présente sous la forme d'une bande allongée, dont la largeur correspond sensiblement au périmètre de la tranchée 11, et dont les bords latéraux portent les parties coopérantes d'un dispositif de fermeture à glissière. L'enveloppe 13 a été préalablement roulée sur elle-même après avoir été pliée le long du milieu de sa largeur, de sorte que les parties coopérantes du dispositif de fermeture à glissière soient adjacentes, à l'extérieur du rouleau ainsi constitué, sans se trouver en état de coopération, c'est-à-dire sans que les bords latéraux de la bande soient solidarisés l'un à l'autre. A l'état de cordon, l'enveloppe 13 a ensuite été stockée enroulée sur un rouleau de réserve 14, monté rotatif sur un support de surface 15, et duquel elle est déroulée et amenée dans une gaine de guidage 16, à l'entrée d'un divergent 17, situé derrière le dispositif de creusement 10, et dont la sortie est tournée du côté opposé à celui où se trouve le front de taille de la tranchée.

Peu après l'entrée dans le divergent 17, les bords latéraux adjacents de la bande sont écartés l'un de l'autre par un dispositif déflecteur 18 comprenant au moins une lèvre de divergence, en aval de laquelle débouche, dans la paroi du divergent 17, l'orifice de sortie d'un groupe de pompage et d'injection à gros débit 19, convenable et de type connu, porté par le châssis du dispositif de creusement 10 qui se trouve entraîné par un support de surface, pouvant être celui 15 portant le rouleau de réserve 14. Le groupe 19 pompe, dans le milieu environnant, de l'eau qu'il injecte entre les deux bords latéraux écartés de l'enveloppe 13, de sorte que cette dernière se déploie et s'applique contre la paroi du divergent 17. En même temps que se réalise le déploiement de l'enveloppe 13 dans le divergent 17, les bords latéraux de l'enveloppe 13 sont rapprochés l'un de l'autre par un dispositif à lèvres de convergence 20, qui tire un curseur 21 assurant la solidarisation des deux parties coopérantes du dispositif de fermeture à glissière, de sorte qu'en arrière du dispositif d'expansion, constitué par le divergent 17 et le groupe de pompage et d'injection 19, l'enveloppe 13 se présente sous la forme d'un manchon ou boudin continu, rempli d'eau en légère surpression par rapport à la pression hydrostatique au niveau de la tranchée 11, dont le volume est ainsi occupé, de sorte que l'enveloppe 13, dont l'épaisseur peut être faible, soit appliquée avec une pression suffisante contre les parois latérales de la tranchée 11 qui ne peuvent s'effondrer.

On réalise ainsi une tranchée 11 à parois latérales sensiblement verticales ou peu inclinées sur la verticale, moulées par la présence dans la tranchée 11 du corps que constitue l'enveloppe 13 remplie d'eau.

Il faut noter qu'en raison du poids propre et de la flexibilité naturelle du pipe-line 6, ce dernier est en appui sur la partie supérieure de l'enveloppe 13 déployée, à une faible distance derrière l'ensemble en déplacement constitué par les dispositifs de creusement 10 et d'évacuation, le groupe de pompage et d'injection 19 et de divergent 17 entraînant le curseur 21, ce qui contribue à mettre l'enveloppe 13 en légère surpression par rapport au milieu environnant, comme cela apparaît sur la figure 4.

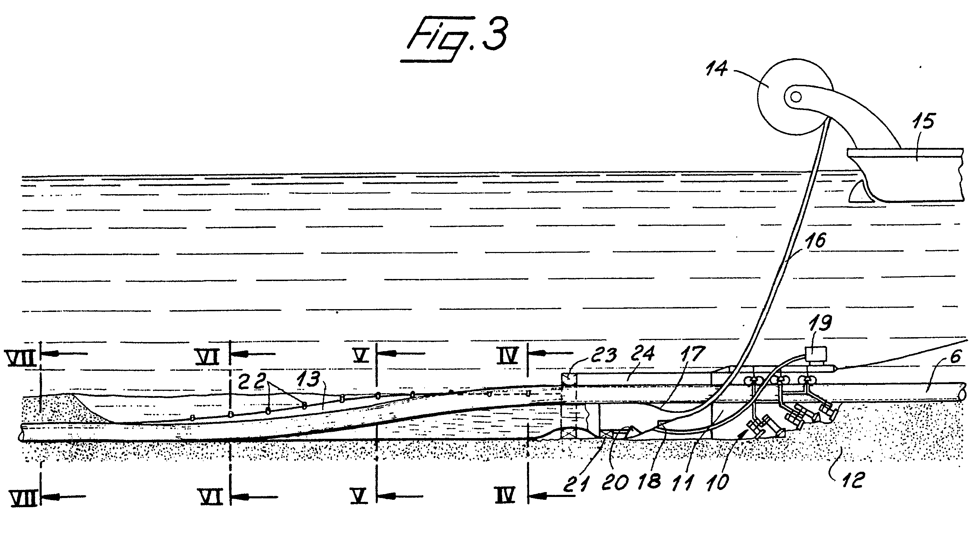

Des orifices libres, délimités par des petites ouvertures 22, éventuellement munies de canaux, régulièrement réparties le long de l'enveloppe 13, occupant la position supérieure de cette dernière lorsqu'elle est déployée, autorisent un débit de fuite vers le milieu liquide environnant. Ainsi, sous les effets combinés de son propre poids et de sa flexibilité naturelle, le pipe-line 6, rempli d'eau à cette occasion de sorte que sa densité apparente soit en général supérieure ou égale à 1,4, assure la compression de l'enveloppe 13 et sa diminution de volume, dans une mesure d'autant plus importante que la distance séparant le point considéré du dispositif d'expansion est grande, comme cela apparaît sur les figures 4, 5 et 6. Le pipe-line 6 descend donc progressivement dans la tranchée 11, dans laquelle il se positionne sur l'enveloppe 13 pratiquement vidée de son eau, comme représenté sur la figure 6. Ce pilotage de la descente du pipe-line 6 dans la tranchée 11, sous l'effet de son propre poids, a pour avantage que les déformations du pipe-line 6 sont réduites et que les contraintes de déformation restent inférieures aux contraintes maximales admissibles. La tranchée 11 peut ensuite être comblée par des moyens appropriés, de type connu, mais ce résultat peut également être obtenu par les effets de la houle ou des courants sous-marins, de sorte que le pipe-line 6 ensouillé soit convenablement protégé.

Si le pipe-line 6 présente un diamètre important, et donc si son poids apparent, lorsqu'il est rempli d'eau, est important, il n'est pas indispensable que des ouvertures telles que 22 soient prévues dans l'enveloppe 13 pour autoriser un débit de fuite permettant la diminution de volume de cette dernière. Cette diminution de volume sera obtenue, en raison du poids apparent important du pipe-line 6, qui, lors de sa descente dans la tranchée 11, poussera devant lui, vers le front de taille de la tranchée 11, un certain volume d'eau facilitant le déploiement et le remplissage de l'enveloppe 13 au niveau du dispositif d'expansion, de sorte que le groupe de pompage et d'injection 19 ne devra fournir qu'un débit complémentaire.

Si l'enveloppe 13 stockée autour du rouleau de réserve 14 se présente sous la forme d'un manchon replié ou enroulé sur lui-même, et amené à l'entrée du divergent 17 par la gaine de guidage 16, le divergent 17 est alors équipé d'un dispositif déflecteur 18 muni d'une lame coupante, découpant l'enveloppe 13 le long de l'une de ses génératrices, les deux bords de la découpe étant ensuite écartés par la ou les lèvres de divergence du dispositif déflecteur 18, puis, après la sortie du groupe de pompage et d'injection 19, rapprochés et superposés sur une largeur suffisante par le dispositif à lèvres de convergence 20, pour qu'ils puissent être solidarisés l'un à l'autre, par exemple par un dispositif de soudage, remplaçant le curseur 21 de l'exemple précédemment décrit.

Pour éviter que les conséquences d'une déchirure ou d'une rupture accidentelle de l'enveloppe 13 déployée ne s'étendent aux parties de cette enveloppe en cours de déploiement ou devant être déployées dans les instants suivants, un dispositif de segmentation transversale 23 de l'enveloppe 13 est prévu derrière le curseur 21 ou le dispositif de solidarisation prévu à la sortie du divergent 17.

Ce dispositif de segmentation transversale 23 peut se présenter sous la forme d'un mécanisme de resserrement transversal, par exemple à diaphragme, associé à une noueuse automatique ligaturant une portion étranglée de l'enveloppe 13 de façon sensiblement étanche. Un tel dispositif peut être mis en œuvre à intervalle régulier, et non seulement en cas de déchirure de l'enveloppe 13, de façon à donner à cette dernière l'aspect d'une suite de boudins compressibles.

Pour empêcher avec certitude l'effondrement des parois latérales de la tranchée 11, avant que l'enveloppe 13 n'ait été suffisamment substituée aux matériaux extraits, de sorte qu'une pression convenable soit appliquée contre les parois latérales de la tranchée 11, un dispositif 24 de maintien temporaire des parois latérales de cette tranchée 11, et constitué par exemple d'un caisson, coffrage ou gabarit, présentant au moins deux flancs rigides et plans, déplacés parallèlement à eux-mêmes et chacun parallèlement à une paroi latérale de la tranchée 11, peut être entraîné le long du pipe-line 6 et sous ce dernier avec le dispositif de creusement 10, le dispositif d'évacuation et le groupe de pompage et d'injection 19. Le dispositif de maintien temporaire 24 est entraîné directement à la suite du dispositif de creusement 10, si le fond sous-marin 12 est d'une cohésion moyenne. Par contre, si ce dernier est d'une faible cohésion, le dispositif de maintien temporaire 24 est déplacé, dans le fond sous-marin 12, sous le pipe-line 6, de sorte que ses flancs plans découpent le fond sous-marin 12 de part et d'autre du pipe-line 6 en s'avançant le long de ce dernier, et le dispositif de creusement 10 est déplacé à la suite du dispositif de maintien temporaire 24, de sorte que la tranchée soit creusée entre les flancs rigides et plans du dispositif de maintien temporaire 24, l'enveloppe 13 étant introduite et déployée dans la tranchée 11 entre ces deux mêmes flancs. Dans ces conditions, le divergent 17 ainsi que le dispositif de segmentation transversale 23 sont tous deux portés par le dispositif de maintien temporaire 24 et déplacés avec ce dernier ainsi qu'avec le dispositif de creusement 10.

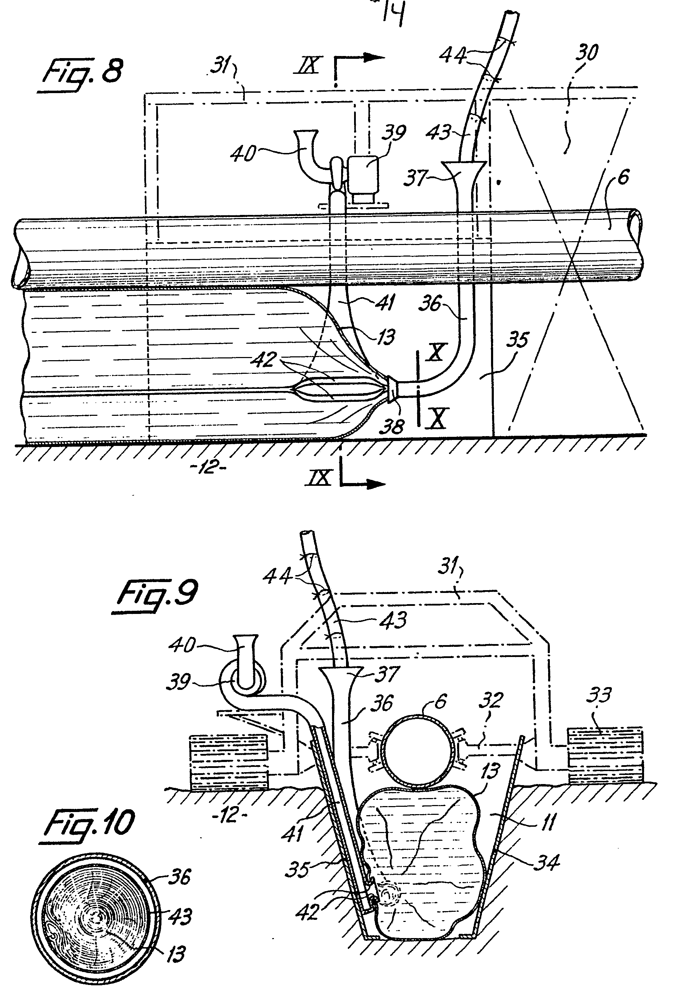

En référence aux figures 8 à 10, un autre exemple de réalisation du dispositif selon l'invention comprend un dispositif de creusement 30, de tout type convenable connu, porté par un châssis 31, représenté en pointillés, se déplaçant en étant guidé le long d'un pipe-line 6 par des capteurs magnétiques portés au bout de bras transversaux 32, au moyen de chenilles 33 en appui de part et d'autre de la tranchée creusée 11. Le châssis 31 porte également, derrière le dispositif de creusement 30, un dispositif de maintien temporaire des parois latérales de la tranchée, constitué par deux flancs rigides 34 et 35, essentiellement plans et repliés à leur partie inférieure pour venir s'appliquer contre le fond de la tranchée 11. Enfin, un conduit d'amenée 36 et un groupe de pompage à gros débit 39 sont également portés par le châssis 31 derrière le dispositif de creusement 30. Le conduit d'amenée 36, coudé et muni d'un collecteur vertical 37 tronconique ainsi que d'un diffuseur horizontal 38, également tronconique et débouchant du côté opposé à celui où se trouve le dispositif de creusement 30, s'étend sensiblement le long du flanc rigide 35. Ce conduit d'amenée 36 guide l'enveloppe 13, à l'état replié et enroulé sur elle-même, de sorte que les deux bords latéraux de la bande de matière souple qui la constitue soient adjacents, superposés ou solidarisés à l'extérieur du cordon ainsi formé, vers la sortie d'une trompe d'injection 41 du groupe 39 aspirant l'eau du milieu environnant par sa conduite d'alimentation 40. La trompe d'injection 41 a la forme d'un entonnoir aplati, s'étendant le long du flanc rigide 35, à l'intérieur de la tranchée 11, et sa sortie, débouchant vers l'intérieur de la tranchée 11, est délimitée par deux rebords latéraux 42 retroussés sur eux-mêmes et ayant, du côté du diffuseur 38, la forme de deux lèvres de divergence, et, de l'autre côté, celle de deux lèvres de convergence, pour assurer respectivement l'écartement puis le rapprochement et éventuellement la superposition des deux bords latéraux de l'enveloppe 13, de sorte que la trompe d'injection 41 débouche entre ces deux bords écartés pour assurer le déploiement, le remplissage et la mise sous pression de l'enveloppe 13 dans la tranchée 11, entre les deux flancs rigides 34 et 35 et sous le pipe-line 6.

Pour éviter un déploiement intempestif de l'enveloppe 13 avant sa pénétration dans le conduit de guidage 36, l'enveloppe repliée est enroulée sur elle-même et disposée dans une gaine frangible 43 ou retenue dans des ligatures frangibles 44 régulièrement espacées, cette gaine 43 et/ou ces ligatures 44 étant rompues dans le conduit d'amenée 36 pour permettre l'écartement des bords de l'enveloppe 13.

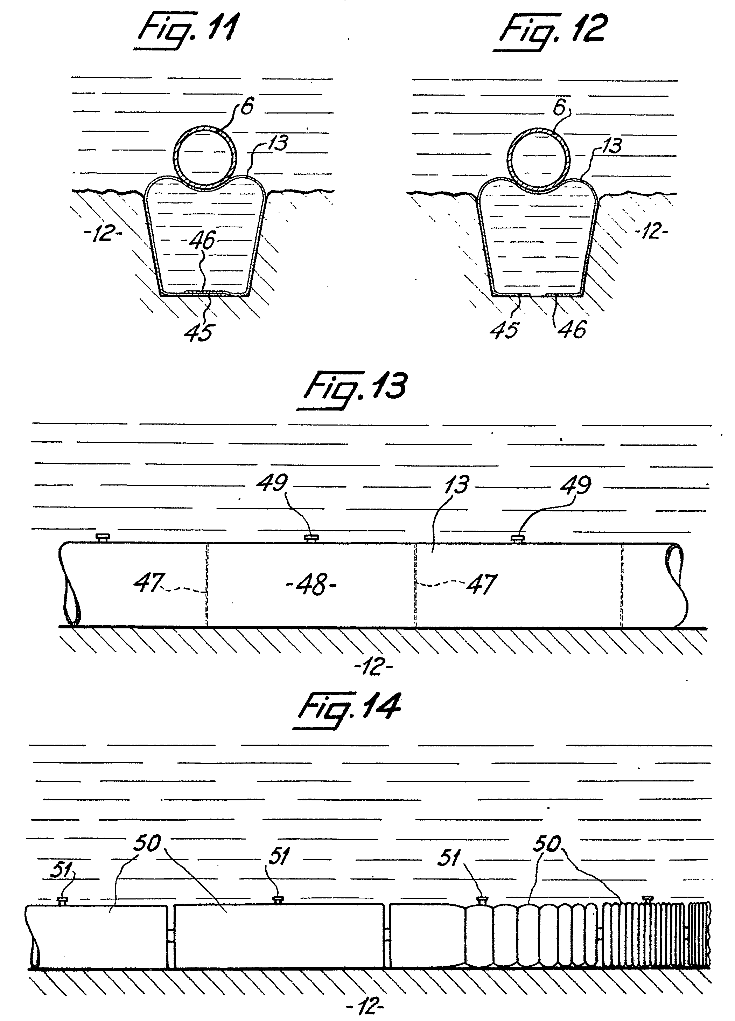

Grâce à la légère surpression régnant dans l'enveloppe 13 déployée, les bords 45, 46 de cette dernière peuvent être maintenus appliqués contre l'une des parois ou contre le fond de la tranchée 11, soit en étant simplement adjacents soit en étant légèrement superposés, comme représenté sur les figures 11 et 12, si l'on ne juge pas nécessaire de les solidariser l'un à l'autre, comme représente schématiquement sur les figures 4 à 7.

Il faut noter que la réalisation de l'enveloppe 13 n'est pas limitée à la forme d'un boudin compressible, également susceptible d'être rempli grâce à une alimentation centrale, mais que, comme représenté sur la figure 13, des parois transversales 47 peuvent être prévues dans l'enveloppe 13, de façon à constituer des compartiments longitudinaux, dont chacun est équipé d'un clapet 49, de surpression ou à ouverture commandée.

Dans le cas où l'enveloppe 13 se présente sous la forme d'une bande allongée, stockée dans la réserve 14 avec ses deux bords latéraux, tels que 45 et 46, solidarisés par un dispositif de fermeture à glissières, le dispositif d'expansion peut comprendre, un curseur d'ouverture, assurant la désolidarisation des bords latéraux, ensuite écartés par tout dispositif approprié, ainsi qu'un curseur de fermeture, assurant la solidarisation des bords latéraux après leur rapprochement par tout dispositif approprié venant en aval du débouché du groupe de pompage et d'injection, de sorte que les deux curseurs remplissent, à la suite l'un de l'autre des fonctions opposées, permettant d'obtenir une enveloppe 13 déployée, remplie et fermée à partir d'une enveloppe stockée repliée, vidée et fermée.

Plutôt que l'utiliser une enveloppe 13 repliée transversalement et enroulée sur elle-même, il est également possible d'utiliser une enveloppe repliée longitudinalement, en accordéon, sur elle-même. Comme représenté sur la figure 14, l'enveloppe peut alors se présenter sous la forme d'une succession de portions cylindriques 50, stockées repliées et comprimées longitudinalement chacune sur elle-même, et amenées chacune à l'état comprimé, dans la tranchée où elles sont déployées, chaque portion cylindrique 50 étant équipée d'un clapet 51 autorisant le débit de fuite pour le positionnement de la conduite dans la tranchée. Les portions cylindriques 50 d'enveloppe peuvent se présenter sous forme de chapelets, éventuellement alimentés en cassettes.

Il est à noter que le procédé et le dispositif de soutènement selon l'invention sont avantageusement associés respectivement à un procédé et à un dispositif de creusement de tranchée, de tout type convenable connu, pour constituer un procédé et un dispositif d'ensouillage de conduites sur chantiers dit «off shore» comme «terrestre», le procédé selon l'invention se substituant avantageusement, dans ce dernier cas, au procédé de tranchée «à la boue», en particulier pour des tranchées de profondeur relativement faible.

## Revendications

1. Procédé de soutènement provisoire des parois latérales d'une tranchée (11) à la suite de creusement de cette dernière dans un sol, en particulier un fond sous-marin (12) constitué de matériaux présentant une faible cohésion, au cours de l'ensouillage d'une conduite (6), telle qu'on oléoduc ou pipe-line dans la tranchée (11), caractérisé en ce qu'il consiste à substituer un corps (13) qui peut être réduit en volume aux matériaux extraits de la tranchée (11), au fur et à mesure de l'avancement de cette dernière, de sorte que ce corps, par sa présence et par la pression qu'il exerce sur les parois latérales de la tranchée (11), empêche l'effondrement de ces dernières, à positionner la conduite sur la partie supérieure du corps, et puis à piloter la réduction de volume de ce corps pour autoriser la descente et le positionnement de la conduite (6) dans la tranchée (11), ainsi que l'effondrement des parois latérales et éventuellement le comblement de cette dernière.

2. Procédé selon la revendication 1, caractérisé en ce qu'il consiste à déplacer, avec l'avancement de la tranchée (11), des moyens (24, 34–35) de maintien temporaire des parois latérales de la tranchée (11) empêchant leur effondrement avant que le corps (13) n'ait été mis en place dans la tranchée (11).

3. Procédé selon l'une des revendications 1 et 2, caractérisé en ce qu'il consiste à utiliser comme corps un corps expansible (13) disposé à l'état contracté ou comprimé dans la tranchée (11), et dont l'augmentation de volume est pilotée entre les deux parois latérales de cette dernière pour empêcher leur effondrement.

4. Procédé selon la revendication 3, caractérisé en ce qu'il consiste à utiliser comme corps expansible une enveloppe (13) d'une matière souple et déformable amenée progressivement dans la tranchée (11) à l'état replié ou enroulé sur elle-même, puis remplie d'un fluide à une pression au moins égale à la pression hydrostatique au niveau de la tranchée (11).

5. Procédé selon l'une des revendications 1 à 4, caractérisé en ce que la conduite (6) se positionne dans la tranchée (11) sous l'effet de son propre poids, en réduisant le volume du corps (13).

6. Procédé selon la revendication 4, caractérisé en ce qu'il consiste de plus à créer un débit de fuite du fluide hors de l'enveloppe (13) pour commander la réduction de volume de l'enveloppe.

7. Procédé selon l'une des revendications 4 et 6, mis en œuvre sur un fond sous-marin, caractérisé en ce qu'on utilise le liquide disponible dans le milieu environnant comme fluide de remplissage de l'enveloppe (13).

8. Dispositif de soutènement provisoire des parois latérales d'une tranchée (11), à la suite du creusement de cette dernière dans un sol, en particulier un fond sous-marin (12) constitué de matériaux présentant une faible cohésion, au moyen d'un dispositif de creusement (10, 30), pour l'ensouillage d'une conduite (6), telle qu'un oléoduc ou pipe-line, dans la tranchée (11), pour la mise en œuvre du procédé selon la revendication 1 précédente, caractérisé en ce qu'il comprend un corps (13) qui peut supporter la conduite (6) et qui peut être réduit en volume, un dispositif de substitution du corps aux matériaux extraits de la tranchée creusée (11), ainsi éventuellement qu'un dispositif de commande de la réduction de volume de ce corps, lorsque cette fonction n'est pas assurée par le poids propre de la conduite (6), le dispositif de substitution et éventuellement le dispositif de commande de la réduction de volume étant de préférence destinés à être déplacés avec le dispositif de creusement (10, 30).

9. Dispositif selon la revendication 8, caractérisé en ce qu'il comprend un dispositif (24) de maintien temporaire des parois latérales de la tranchée (11), sous la forme d'un gabarit, caisson ou coffrage présentant au moins deux flancs rigides (34, 35) destinés à être déplacés en même temps que le dispositif de creusement (10, 30), parallèlement à eux-mêmes et chacun parallèlement à une paroi latérale de la tranchée (11) dont il empêche l'effondrement, et entre lesquels le dispositif de substitution du corps (13) assure le positionnement de ce dernier dans la tranchée (11).

10. Dispositif selon l'une des revendications 8 et 9, caractérisé en ce que le dispositif de substitution du corps (13) comprend un dispositif d'expansion d'un corps expansible destiné à être disposé à l'état contracté ou comprimé dans la tranchée (11) par un dispositif d'amenée (16, 36).

11. Dispositif selon la revendicaton 10, caractérisé en ce que le dispositif d'expansion comprend un divergent (17) à l'entrée duquel le corps expansible se présente à l'état comprimé ou contracté.

12. Dispositiv selon l'une des revendications 10 et 11, caractérisé en ce que le dispositif d'expansion comprend un dispositif de pompage et d'injection (19, 39) d'un fluide sous pression dans le corps expansible, constitué par une enveloppe (13) d'une matière souple et déformable, progressivement amenée dans la tranchée (11) à l'état replié ou enroulé sur elle-même, par le dispositif d'amenée (16, 36), à partir d'une réserve (14), de préférence destinée à être déplacée en même temps que le dispositif d'amenée (16, 36), le dispositif d'expansion, et éventuellement le dispositif de commande de la réduction de volume et le dispositif de maintien temporaire (24).

13. Dispositif selon la revendication 12 telle que rattachée à la revendication 11, caractérisé en ce que le dispositif de pompage et d'injection (19) du fluide sous pression débouche dans le divergent (17) et coopère avec ce dernier pour assurer le passage de l'enveloppe (13) de l'état replié ou enroulé sur elle-même à l'état déployé, contre les parois de la tranchée (11).

14. Dispositif selon l'une des revendications 12 et 13, caractérisé en ce que l'enveloppe (13) est maintenue à l'état replié ou enroulé sur elle-même dans des ligatures (44) ou dans une gaine (43) frangibles qui sont rompues avant l'entrée dans le dispositif d'expansion.

15. Dispositif selon l'une des revendications 13 et 14, caractérisé en ce qu'un dispositif de resserrement transversal (23) de l'enveloppe (13) est prévu à la sortie du dispositif d'expansion.

16. Dispositif selon l'une des revendications 12 à 15, caractérisé en ce que l'enveloppe (13) se présente sous la forme d'une manchon de section essentiellement cylindrique à l'état déployé.

17. Dispositif selon la revendication 16, caractérisé en ce que l'enveloppe (13) est segmentée en compartiments longitudinaux (48).

18. Dispositif selon l'une des revendications 12 à 15, caractérisé en ce que l'enveloppe (13) se présente sous la forme d'une succession de soufflets (50) comprimés longitudinalement, et amenés en chapelet dans le dispositif d'expansion et dans la tranchée (11) où ils déployés à la suite les uns des autres.

19. Dispositif selon l'une des revendications 16 à 18, caractérisé en ce que le dispositif de pompage et d'injection assure l'alimentation centrale de l'enveloppe (13).

20. Dispositif selon l'une des revendications 12 à 17, caractérisé en ce que l'enveloppe (13) se présente sous la forme d'une bande allongée, stockée dans la réserve (14) avec ses deux bords latéraux rapprochés ou superposés, et en ce que le dispositif d'expansion comprend au moins deux lèvres divergentes assurant l'écartement des bords latéraux de la bande, et entre lesquels débouche le dispositif de pompage et d'injection (19, 39).

21. Dispositif selon l'une des revendications 12 à 17, caractérisé en ce que l'enveloppe (13) se présente sous la forme d'une bande allongée, stockée dans la réserve (14) avec ses deux bords latéraux (45, 46) solidarisés, éventuellement par un dispositif de solidarisation, par exemple à glissière, autorisant leur désolidarisation, et en ce que le dispositif d'expansion comprend un dispositif d'ouverture (18, 42), de la bande muni d'au moins deux lèvres divergentes assurant l'écartement des bords de l'ouverture, et entre lesquelles débouche le dispositif de pompage et d'injection (19, 39), le dispositif d'ouverture (18, 42) comprenant éventuellement un moyen de commande de la désolidarisation des bords latéraux (45, 46) solidarisés par le dispositif de solidarisation.

22. Dispositif selon l'une des revendications 20 et 21, caractérisé en ce que le dispositif d'expansion comprend également au moins deux lèvres convergentes (20, 42) assurant le rapprochement, et éventuellement la superposition, en regard d'une paroi de la tranchée (11) contre laquelle ils sont appliqués par la pression du fluide injecté, des bords écartés par les lèvres divergentes.

23. Dispositif selon l'une des revendications 20 et 21, caractérisé en ce que le dispositif d'expansion comprend également un dispositif de solidarisation (21) des bords écartés par les lèvres divergentes.

24. Dispositif selon l'une des revendications 12 à 23 caractérisé en ce que des orifices libres (22) régulièrement répartis dans l'enveloppe (13) autorisent un débit de fuite du fluide sous pression hors de l'enveloppe (13).

## Patentansprüche

1. Verfahren für das vorläufige Abstützen der Seitenwände eines Grabens (11), nachdem dieser in einen Boden, insbesondere einen Unterwasserboden (12), welcher aus Materialien mit schwacher Kohäsion besteht, gezogen wurde, um eine Rohrleitung, beispielsweise eine Erdölleitung oder Pipeline im Graben zu versenken, dadurch gekennzeichnet, dass man die aus dem Graben (11) ausgehobenen Materialien durch einen im Volumen reduzierbaren Körper (13) ersetzt, um den Graben entsprechend vorzuschieben, sodass der Körper durch sein Vorhandensein und durch den Druck, den er auf die Seitenwände des Grabens (11) ausübt, den Einsturz der Seitenwände verhindert, dass man weiters die Rohrleitung auf den oberen Abschnitt des Körpers legt und dass man dann die Volumsverkleinerung dieses Körpers steuert, um das Absinken und die Positionierung der Rohrleitung (6) im Graben (11) sowie den Einsturz der Seitenwände und eventuell auch die Ausfüllung des Grabens zu veranlassen.

2. Verfahren nach Anspruch 1, dadurch gekennzeichnet, dass man beim Vorschieben des Grabens (11) Einrichtungen (24, 34–35) für das zeitweise Festhalten der Seitenwände des Grabens (11), welche ein Einstürzen der Seitenwände vor dem Einsetzen des Körpers (13) in den Graben (11) verhindern, verlagert.

3. Verfahren nach Anspruch 1 oder 2, dadurch gekennzeichnet, dass man als Körper einen dehnbaren Körper (13) einsetzt, welcher im zusammengezogenen oder komprimierten Zustand in den Graben (11) gesetzt wird und dessen Volumsvergrösserung zwischen den beiden Seitenwänden des Grabens gesteuert wird, um das Einstürzen der Seitenwände zu verhindern.

4. Verfahren nach Anspruch 3, dadurch gekennzeichnet, dass man als dehnbaren Körper einen Mantel (13) aus weichem und verformbarem Material verwendet, welcher in einem in sich zusammengefalteten oder zusammengerollten Zustand fortlaufend im Graben zugeführt wird und dann mit einer Flüssigkeit bei einem Druck gefüllt wird, welcher zumindest dem hydrostatischen Druck im Bereich des Grabens entspricht.

5. Verfahren nach einem der Ansprüche 1 bis 4, dadurch gekennzeichnet, dass sich die Leitung (6) unter der Wirkung ihres eigenen Gewichtes im Graben (11) positioniert und dabei das Volumen des Mantels verkleinert.

6. Verfahren nach Anspruch 4, dadurch gekennzeichnet, dass man eine Flüssigkeits-Abflussmenge für ein Abfliessen aus dem Mantel (13) bildet, um die Volumsverkleinerung des Mantels zu steuern.

7. Verfahren nach Anspruch 4 oder 6, welches auf einem Unterwasserboden eingesetzt wird, dadurch gekennzeichnet, dass man die in der Umgebung vorhandene Flüssigkeit als Füllflüssigkeit für den Mantel (13) verwendet.

8. Vorrichtung für die Durchführung des Verfahrens nach Anspruch 1, welche zum vorläufigen Abstützen der Seitenwände eines Grabens (11) dient, nachdem dieser in einen Boden, insbesondere Unterwasserboden (12), welcher aus Materialien mit schwacher Kohäsion besteht, gezogen wurde, um eine Rohrleitung, beispielsweise eine Erdleitung oder Pipeline, im Graben zu versenken, gekennzeichnet durch einen Körper (13), der die Leitung (6) stützen und volumsmässig verkleinert werden kann, durch eine Vorrichtung für den Austausch des Körpers gegen die aus dem vorgeschobenen Graben ausgehobenen Materialien, sowie gegebenenfalls durch eine Vorrichtung zum Steuern der Verkleinerung des Volumens des Körpers, falls diese Funktion nicht durch das Eigengewicht der Rohrleitung (6) sichergestellt ist, wobei die Vorrichtung für den Austausch und gegebenenfalls auch die Vorrichtung zum Steuern der Volumsverkleinerung des Körpers vorzugsweise für eine Verschiebung gemeinsam mit der Vorrichtung zum Ausbaggern (10, 30) bestimmt ist.

9. Vorrichtung nach Anspruch 8, gekennzeichnet durch eine Einrichtung (24) zum vorläufigen Aufrechterhalten der Seitenwände des Grabens (11), welche die Form einer Schablone, eines Kastens oder einer Verschalung mit mindestens zwei zueinander parallelen starren Flanken (34, 35) aufweist, wobei die Flanken für eine gleichzeitige Verschiebung mit der Vorrichtung zum Ausbaggern (10, 30) bestimmt sind und jede Flanke parallel zu einer Seitenwand des Grabens (11), dessen Einsturz sie verhindert, verläuft, und zwischen diesen Flanken die Vorrichtung für den Austausch des Körpers (13) die Positionierung des Körpers im Graben (11) sicherstellt.

10. Vorrichtung nach Anspruch 8 oder 9, dadurch gekennzeichnet, dass die Vorrichtung für den Austausch des Körpers (13) eine Einrichtung zum Ausdehnen eines dehnbaren Körpers, welcher im zusammengezogenen oder komprimierten Zustand mittels einer Zubringervorrichtung (16, 36) in den Graben einzusetzen ist, aufweist.

11. Vorrichtung nach Anspruch 10, dadurch gekennzeichnet, dass die Einrichtung zum Ausdehnen einen divergierenden Abschnitt (17), an dessen Eingang sich der dehnbare Körper im komprimierten bzw. zusammengezogenen Zustand befindet, aufweist.

12. Vorrichtung nach Anspruch 10 oder 11, dadurch gekennzeichnet, dass die Einrichtung zum Ausdehnen eine Vorrichtung (19, 39) zum Pumpen und Einspritzen einer Druckflüssigkeit in den dehnbaren Körper aufweist, welche aus einer Umhüllung (13) aus einem biegsamen und verformbaren Material besteht, die im Graben (11) fortlaufend im zusammengefalteten oder eingerollten Zustand von der Zubringervorrichtung (16, 36) zugeführt wird und von einer Reserve (14) ausgeht, welche vorzugsweise zur gleichen Zeit wie die Zubringervorrichtung (16, 36), die Einrichtung zum Ausdehnen und eventuell auch die Vorrichtung zum Steuern der Volumsverkleinerung und die Einrichtung zum vorläufigen Aufrechterhalten (24) verschoben werden soll.

13. Vorrichtung nach Anspruch 12 im Zusammenhang mit Anspruch 11, dadurch gekennzeichnet, dass die Vorrichtung (19) zum Pumpen und Einspritzen der Druckflüssigkeit in den divergierenden Abschnitt (17) mündet und mit diesem zusammenwirkt, um den Übergang der im zusammengefalteten oder in sich zusammengerollten Zustand befindlichen Umhüllung (13) in den gegen die Wände des Grabens (11) ausgebreiteten Zustand sicherzustellen.

14. Vorrichtung nach einem der Ansprüche 12 oder 13, dadurch gekennzeichnet, dass die Umhüllung (13) im zusammengefalteten oder in sich zusammengerollten Zustand in zerreissbaren Einschnürungen (44) oder in einer zerreissbaren Hülle (43) gehalten wird, welche vor dem Eintritt in die Einrichtung zum Ausdehnen durchbrochen werden.

15. Vorrichtung nach einem der Ansprüche 13 oder 14, dadurch gekennzeichnet, dass am Ausgang der Ausdehnvorrichtung eine Einrichtung (23) zum Einschnüren der Umhüllung in Querrichtung vorgesehen ist.

16. Vorrichtung nach einem der Ansprüche 12 bis 15, dadurch gekennzeichnet, dass die Umhüllung (13) im ausgebreiteten Zustand die Form einer Muffe mit im wesentlichen zylindrischem Querschnitt aufweist.

17. Vorrichtung nach Anspruch 16, dadurch gekennzeichnet, dass die Umhüllung (13) in Längsabteilungen (48) unterteilt ist.

18. Vorrichtung nach einem der Ansprüche 12 bis 15, dadurch gekennzeichnet, dass die Umhüllung (13) die Form einer Reihe von in Längsrichtung zusammengepressten Faltenbälgen, welche in Serie in die Einrichtung zum Ausdehnen und in den Graben (11) geführt werden, wo sie nacheinander ausgebreitet werden, aufweist.

19. Vorrichtung nach einem der Ansprüche 16 oder 18, dadurch gekennzeichnet, dass die Pump- und Einspritzvorrichtung die Beschickung im Zentrum der Umhüllung (13) sicherstellt.

20. Vorrichtung nach einem der Ansprüche 12 bis 17, dadurch gekennzeichnet, dass die Umhüllung (13) die Form eines länglichen Bandes, dessen zwei Seitenwände in der Reserve (14) aneinandergerückt oder überlagert angeordnet sind, aufweist, und dass die Einrichtung zum Ausdehnen mindestens zwei divergierende Lippen, welche den Abstand zwischen den Seitenkanten des Bandes sicherstellen und zwischen denen die Pump- und Einspritzvorrichtung (19, 39) einmündet, aufweist.

21. Vorrichtung nach einem der Ansprüche 12 bis 17, dadurch gekennzeichnet, dass die Umhüllung (13) die Form eines länglichen Bandes, dessen zwei Seitenwände (45, 46) in der Reserve (14) eventuell mittels einer Befestigungsvorrichtung, beispielsweise mit einer Gleitschiene, welche die Abnahme gestattet, gelagert sind, aufweist, und dass die Einrichtung zum Ausdehnen eine Vorrichtung (18, 42) zum Öffnen des mit mindestens zwei divergierenden Lippen, zwischen denen die Pumpe- und Einspritzvorrichtung (19, 39) mündet, ausgestatteten Bandes aufweist, welche eventuell mit einer Steuereinrichtung für die Abnahme der von der Befestigungsvorrichtung befestigten Seitenkanten (45, 46) versehen ist.

22. Vorrichtung nach einem der Ansprüche 20 oder 21, dadurch gekennzeichnet, dass die Einrichtung zum Ausdehnen weiters mindestens zwei zusammenlaufende Lippen (20, 42) aufweist, welche die Annäherung und eventuell die Überlagerung der durch die divergierenden Lippen auseinandergehaltenen Kanten bezüglich einer Wand des Grabens (11), gegen die zusammenlaufenden Lippen durch den Druck der eingespritzen Flüssigkeit gedrückt werden, sicherstellen.

23. Vorrichtung nach einem der Ansprüche 20 oder 21, dadurch gekennzeichnet, dass die Einrichtung zum Ausdehnen weiters eine Befestigungsvorrichtung (21) zur Befestigung der durch

die divergierenden Lippen auseinandergehaltenen Kanten aufweist.

24. Vorrichtung nach einem der Ansprüche 12 bis 23, dadurch gekennzeichnet, dass freie Öffnungen (22), welche in der Umhüllung (13) regelmässig verteilt sind, eine aus der Umhüllung (13) abfliessende Druckflüssigkeits-Abflussmenge sicherstellen.

**Claims**

1. Method for temporarily retaining the lateral walls of a trench (11), after the latter has been dug in ground, especially an underwater bed (12) consisting of materials having poor cohesion, during the embedding of a pipe (6), such as an oil pipe or a pipeline, in the trench (11), characterised in that it comprises substituting a member that can be reduced in volume for the materials removed from the trench (11) as the trench advances, in such a manner that this member, by its presence and by the pressure it exerts on the lateral walls of the trench (11), prevents the latter from collapsing, positioning the pipe on the upper part of the member and then piloting the reduction in volume of this member to allow the descent and positioning of the pipe (6) in the trench (11) and to allow the lateral walls to collapse and, if necessary, the trench to fill in.

2. Method according to claim 1, characterised in that it comprises moving, as the trench (11) advances, means (24, 34–35) for temporarily supporting the lateral walls of te trench (11) which prevent the walls from collapsing before the member (13) has been placed in the trench (11).

3. Method according to one of claims 1 and 2, characterised in that it comprises using, as the said member, an expansible member (13) placed in its contracted or compressed state in the trench (11), the increase in volume of which member is piloted between the two lateral walls of the trench to prevent them collapsing.

4. Method according to claim 3, characterised in that it comprises using, as expansible member, an envelope (13) consisting of a supple and deformable substance which is conveyed progressively into the trench (11) in a state folded or coiled upon itself and is then filled with a fluid at a pressure which is at least equal to the hydrostatic pressure at the level of the trench (11).

5. Method according to one of claims 1 to 4, characterised in that the pipe (6) positions itself in the trench (11) under the effect of its own weight, reducing the volume of the member (13).

6. Method according to claim 4, characterised in that it comprises, additionally, producing a flow of escaping fluid out of the envelope (13) to control the reduction in volume of the envelope.

7. Method according to one of claims 4 and 6, used on an underwater bed, characterised in that the liquid available in the surrounding medium is used as fluid for filling the envelope (13).

8. Device for temporarily retaining the lateral walls of a trench (11), after the latter has been dug in ground, especially an underwater bed (12) consisting of materials having poor cohesion, by means of a digging device (10, 30), in order to embed a pipe (6), such as an oil pipe or pipeline, in the trench (11), to implement the method according to the preceding claim 1, characterised in that it comprises a member (13) which can support the pipe (6) and which can be reduced in volume, a device for substituting the member for the materials removed from the trench (11) that has been dug and also, if necessary, a device for controlling the reduction in volume of this member when this is not brought about by the weight of the pipe (6) itself, the substitution device and, if necessary, the device for controlling the reduction in volume preferably being designed to be moved together with the digging device (10, 30).

9. Device according to claim 8, characterised in that it comprises a device (24) for temporarily supporting the lateral walls of the trench (11), which device is in the form of a former, caisson or coffering having at least two rigid sides (34, 35) which are designed to be moved at the same time as the digging device (10, 30) parallel to each other and each parallel to one lateral wall of the trench (11) which they prevent from collapsing, and between which the device for substituting the member (13) ensures the positioning of the latter in the trench (11).

10. Device according to one of claims 8 and 9, characterised in that the device for substituting the member (13) comprises an expansion device for an expansible member designed to be placed in contracted or compressed state in the trench (11) by a conveying device (16, 36).

11. Device according to claim 10, characterised in that the expansion device comprises a diverger (17) at the entrance of which the expansible member is in compressed or contracted state.

12. Device according to one of claims 10 and 11, characterised in that the expansion device comprises a device (19, 39) for pumping and injecting a fluid under pressure into the expansible member formed by an envelope (13) which consists of a supple and deformable substance and is conveyed progressively from a reserve (14) into the trench (11) in a state folded or coiled upon itself by the conveying device (16, 36), the reserve preferably being designed to be moved at the same time as the conveying device (16, 36), the expansion device and, if necessary, the device for controlling the reduction in volume and the temporary support device (24).

13. Device according to claim 12 when appended to claim 11, characterised in at the device (19) for pumping and injecting the fluid under pressure opens out into the diverger (17) and cooperates with the latter to ensure the transition of the envelope (13) from the state of being folded or coiled upon itself to the unfolded state against the walls of the trench (11).

14. Device according to one of claims 12 and 13, characterised in that the envelope (13) is held in a state folded or coiled upon itself in breakable ligatures (44) or in a breakable sheath (43) which are broken before entry into the expansion defice.

15. Device according to one of claims 13 and 14, characterised in that a device (23) for transverse pinching of the envelope (13) is provided at the exit of the expansion device.

16. Device according to one of claims 12 to 15, characterised in that the envelope (13) is in the form of a sleeve having a substantially cylindrical cross-section in the unfolded state.

17. Device according to claim 16, characterised in that the envelope (13) is segmented into longitudinal compartments (48).

18. Device according to one of claims 12 to 15, characterised in that the envelope (13) is in the form of a series of bellows (50), compressed longitudinally and conveyed in a string into the expansion device and into the trench (11) where they are unfolded one after the other.

19. Device according to one of claims 16 to 18, characterised in that the device form pumping and injecting feeds the envelope (13) centrally.

20. Device according to one of claims 12 to 17, characterised in that the envelope (13) is in the form of an elongate strip stored in the reserve (14) with its two lateral edges adjacent or superposed and the expansion device comprises at least two diverging lips which ensure that the lateral edges of the strip are separated and between which the device for pumping and injecting (19, 39) opens out.

21. Device according to one of claims 12 to 17, characterised in that the envelope (13) is in the form of an elongate strip stored in the reserve (14) with its two lateral edges (45, 46) interlocked, if necessary by an interlocking device, for example having a glider, which allows them to be released and the expansion device comprises a device (18, 42) for opening the strip provided with at least two diverging lips which ensure the separation of the edges of the opening and between which the device (19, 39) for pumping and injecting opens out, the opening device (18, 42) comprising, if necessary, a means for controlling the release of the lateral edges (45, 46) interlocked by the interlocking device.

22. Device according to one of claims 20 and 21, characterised in that the expansion device also comprises at least two converging lips (20, 42) which ensure that the edges separated by the diverging lips are brought together and, if necessary, superposed facing one wall of the trench (11) against which they are pressed by the pressure of the fluid injected.

23. Device according to one of claims 20 and 21, characterised in that the expansion device also comprises a device (21) for interlocking the edges separated by the diverging lips.

24. Device according to one of claims 12 to 23, characterised in that free orifices (22) are distributed regularly in the envelope (13) which allow a flow of escaping fluid under pressure out of the envelope (13).

1/4

Fig.1

Fig.2

Fig.4

Fig.5

Fig.6

Fig.7

Fig.3

Fig. 8

Fig. 9

Fig. 10

_Fig. 11_

6
13
-12-
46
45

_Fig. 12_

6
13
-12-
45  46

_Fig. 13_

49  13  49
47  -48-  47
-12-

_Fig. 14_

50  51  51  50
51
-12-